# EUROPEAN PATENT SPECIFICATION

(11) **EP 1 566 329 B1**
(45) Date of publication and mention of the grant of the patent: **12.03.2008**
(21) Application number: 05001011.5
(22) Date of filing: 19.01.2005
(51) Int. Cl.: B62K 21/12, B62K 21/26

(54) **Bicycle handlebar**
Fahrradlenker
Guidon pour bicyclette

(30) Priority: 19.02.2004 US 780900
(43) Date of publication of application: 24.08.2005
(73) Proprietor: SHIMANO INC., Osaka 590-8577 (JP)
(72) Inventor: Okada, Shigekatsu, Sakai Osaka (JP); Lawrence, David, Irvine California 92618 (US); Piazza, Anthony, Palo Alto California 94301 (US); Webster, David, Palo Alto California 94301 (US)
(74) Representative: Hofmann, Harald

(56) References cited:
- WO-A-01/68441
- WO-A-95/24333
- DE-A1- 3 628 649
- DE-U1- 8 311 443
- DE-U1- 9 202 059
- FR-A- 886 661
- FR-A- 1 121 588
- FR-A- 2 349 487
- GB-A- 2 138 755
- US-A- 3 533 305
- US-A- 4 276 787
- US-A- 6 098 493

## Description

### Field of the Invention

This invention generally relates to a bicycle handlebar. More specifically, the present invention relates to a bicycle handlebar having ergonomically shaped gripping portions, each of which preferably having a loop-shape with an elastic element configured and arranged to retain a bicycle accessory component therein.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle as well as the frame of the bicycle. One component that has been extensively redesigned is the bicycle handlebar. Bicycle handlebars are constantly being redesigned to be lightweight and more aerodynamic in design as well as to be simple to manufacture and assemble. Bicycle handlebars are also being redesigned to allow increased comfort for the rider and efficient power transfer to the bicycle.

There are many different types of bicycle handlebars, which are currently available on the market. The most basic bicycle handlebars include a linear cross-bar rigidly coupled to the stem portion. Alternatively, a curved cross-bar is sometimes utilized on certain types of bicycles. These curved cross-bars typically have a linear portion with a curved portion formed at each end of the linear portion, such as in GB 2138755. Examples of typical handlebars are given in DE3628649, FR 1121588, DE 8611443. In any case, brake operating devices, derailleur operating devices and optional accessories such as cycle-computers, water bottle holders, bells or the like are coupled to the handlebar for control and use by the rider while riding the bicycle. All of these devices are typically coupled to the handlebar with conventional tubular clamping members. Document WO 01/688441 discloses a bicycle with a handlebar according to the preamble of claim 1.

Because typical components and accessories are clamped to the handlebar, these devices can sometimes rotate on the handlebar causing them to be difficult to view and operate for the rider. Additionally, because typical components and accessories are clamped to the handlebar, some or all of the components/accessories are sometimes inconvenient or uncomfortable to view and operate for the rider. Moreover, these typical handlebar attachments can be cumbersome, difficult to install and relatively heavy. Finally, the typical devices clamped on the handlebar can be caught on debris or the like, and can be unattractive when mounted as separate elements on the handlebar.

In view of the above, it will be apparent to those skilled in the art from this disclosure that there exists a need for an improved bicycle handlebar that overcomes problems in the prior art. This invention addresses this need in the art as well as other needs, which will become apparent to those skilled in the art from this disclosure.

### SUMMARY OF THE INVENTION

One object of the present invention is to provide a bicycle handlebar with ergonomically shaped gripping portions.

Another object of the present invention is to provide a bicycle handlebar, which has an attractive appearance.

Still another object of the present invention is to provide a bicycle handlebar, to which numerous different accessory components can be easily coupled.

Yet still another object of the present invention is to provide a bicycle handlebar, which is relatively simple and inexpensive to manufacture and assemble.

The foregoing objects can basically be attained by providing a bicycle handlebar that comprises a mounting portion, a first gripping portion and a second gripping portion. The mounting portion is configured and arranged to be coupled to a bicycle in a direction transverse to a center plane of the bicycle. The first gripping portion extends outwardly from the mounting portion in a first direction located on a first side of the center plane. The first gripping portion includes a pair of first bar sections diverging outwardly from each other as the first bar sections extend away from the center plane. The second gripping portion extends outwardly from the mounting portion in a second direction located on a second side of the center plane.

The forgoing objects can also basically be attained by providing a bicycle handlebar that comprises a mounting portion, a first gripping portion and a second gripping portion. The mounting portion is configured and arranged to be coupled to a bicycle in a direction transverse to a center plane of the bicycle. The first gripping portion extends outwardly from the mounting portion in a first direction located on a first side of the center plane. The second gripping portion extends outwardly from the mounting portion in a second direction located on a second side of the center plane. At least one of the first and second gripping portions is configured and arranged to form a pair of bar sections, which define an accessory receiving space between the bar sections. The accessory receiving space has an elastic element disposed therein that is configured and arranged to retain a bicycle accessory component in the accessory receiving space. The first and second gripping portions are integrally formed with the mounting portion as a one-piece, unitary member.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a front side perspective view of a bicycle with a handlebar in accordance with a first embodiment of the present invention;

Figure 2 is an enlarged, top plan view of the handlebar with accessory components coupled thereto as illustrated in Figure 1;

Figure 3 is a top plan view of the handlebar illustrated in Figure 2, with the accessory components removed and with the handlebar removed from the stem for the purpose of illustration;

Figure 4 is an enlarged top plan view of a portion of the handlebar illustrated in Figure 3, with angled lines illustrated as construction lines for the purpose of illustration;

Figure 5 is an enlarged, cross-sectional view of the handlebar illustrated in Figures 1-4 and one of the accessory components illustrated in Figures 1 and 2, as seen along section line 5-5 of Figure 2;

Figure 6 is an enlarged, cross-sectional view of the handlebar illustrated in Figures 1-4 and one of the accessory components illustrated in Figures 1 and 2, as seen along section line 6-6 of Figure 2;

Figure 7 is an enlarged, cross-sectional view of the handlebar illustrated in Figures 1-4, as seen along section line 7-7 of Figure 3;

Figure 8 is a top plan view of the handlebar illustrated in Figures 1-7, but with different accessory components coupled thereto;

Figure 9 is a top plan view of the handlebar illustrated in Figures 1-8, but with other different accessory components coupled thereto;

Figure 10 is an enlarged, cross-sectional view of the handlebar and one of the accessory components (shown in elevation for the purpose of illustration) illustrated in Figure 8, as seen along section line 10-10 of Figure 8;

Figure 11 is an enlarged, cross-sectional view of the handlebar and the other one of the accessory components (shown in elevation for the purpose of illustration) illustrated in Figure 8, as seen along section line 11-11 of Figure 8;

Figure 12 is an enlarged, cross-sectional view of the handlebar and one of the accessory components (shown in elevation for the purpose of illustration) illustrated in Figure 9, as seen along section line 12-12 of Figure 9; and

Figure 13 is an enlarged, cross-sectional view of the handlebar and the other one of the accessory components (shown in elevation for the purpose of illustration) illustrated in Figure 9, as seen along section line 13-13 of Figure 9.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

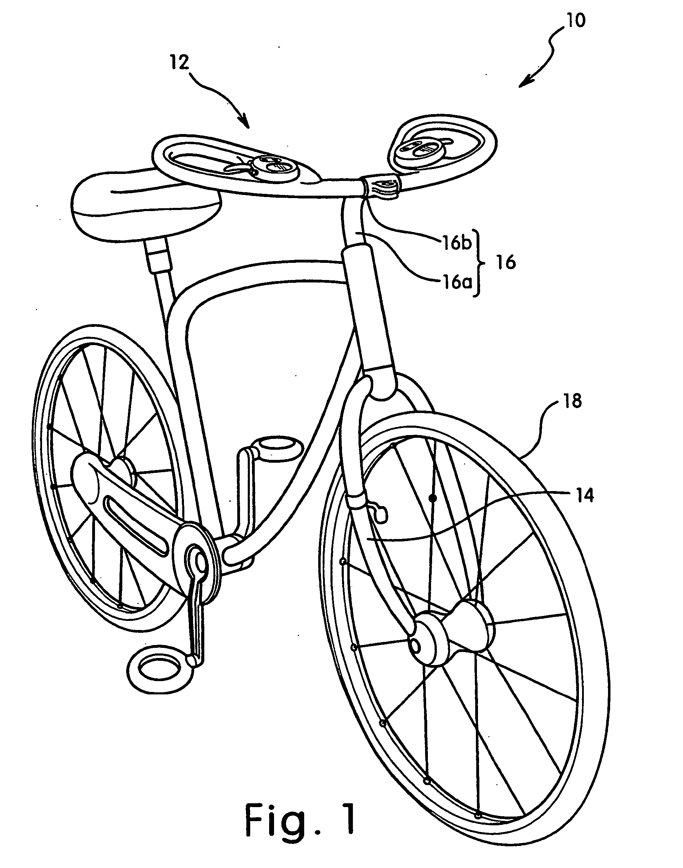

Referring initially to Figures 1-3, a bicycle 10 with a handlebar 12 is illustrated in accordance with a first embodiment of the present invention. The handlebar 12 is coupled to a front fork 14 via a stem 16 in order to steer a front wheel 18 in a relatively conventional manner. Specifically, the front fork 14 has the front wheel 18 rotatably mounted thereto in a conventional manner, while the front fork 14 is pivotally coupled to a front portion of the frame of the bicycle 10 in a conventional manner. The bicycle 10 and its various components are well known in the prior art, except for the handlebar 12 of the present invention. Thus, the bicycle 10 and its various components will not be discussed or illustrated in detail herein, except for the components that relate to the present invention.

The handlebar 12 of the present invention basically includes a mounting portion 20 and a pair of (i.e., first and second) gripping portions 22a and 22b arranged at opposite ends of the mounting portion 20. The mounting portion 20 is configured and arranged to be coupled to the bicycle 10 in a direction transverse to a center plane P of the bicycle 10. Specifically, the mounting portion 20 is preferably coupled to the stem 16, as explained below. The gripping portions 22a and 22b are preferably loop-shaped members that are integrally formed with the mounting portion 20 as a one-piece, unitary member. The first and second gripping portions 22a and 22b are configured and arranged to retain a pair of (i.e., first and second) bicycle accessory components 24a and 24b, respectively.

Specifically, the gripping portion 22a is preferably configured and arranged to form a (first) accessory receiving space 26a having a (first) elastic element 28a disposed therein, while the gripping portion 22b is preferably configured and arranged to form a (second) accessory receiving space 26b having a (second) elastic element 28b disposed therein. The first and second elastic elements 28a and 28b are configured and arranged to retain the first and second accessory components 24a and 24b in the first and second accessory receiving spaces 26a and 26b, respectively, as explained below in more detail.

Referring still to Figures 1-3, the stem 16 preferably includes a fork mounting portion 16a and a handlebar mounting portion 16b extending at an angle to the fork mounting portion 16a. The fork mounting portion 16a is preferably non-movably coupled to the handlebar mounting portion 16b. In the illustrated embodiment, the handlebar mounting portion 16b is preferably a tubular clamping member that couples the mounting portion 20 of the handlebar 12 thereto in a conventional manner, while the fork mounting portion 16a is preferably a cylindrical member with an adjustable, expansion member formed at its lower end in a conventional manner. Thus, the fork mounting portion 16a is preferably mounted within a head tube of the front fork 14 in a conventional manner.

The mounting portions 16a and 16b of the stem 16 are preferably conventional. Thus, the stem 16 will not be discussed and/or illustrated in detail herein, except as related to the handlebar 12 of the present invention. However, it will be apparent to those skilled in the art from this disclosure that the stem 16 can have a modified structure as needed and/or desired as long as the stem 16 is configured and arranged to cooperate with the handlebar 12 in order to fixedly secure the handlebar 12 to the front fork 14. For example, the stem 16 could be integrally formed with part of the handlebar 12 (e.g., integrally formed with the mounting portion 20) or with part of the front fork 14 (e.g., integrally formed with a head tube of the front fork 14) if needed and/or desired.

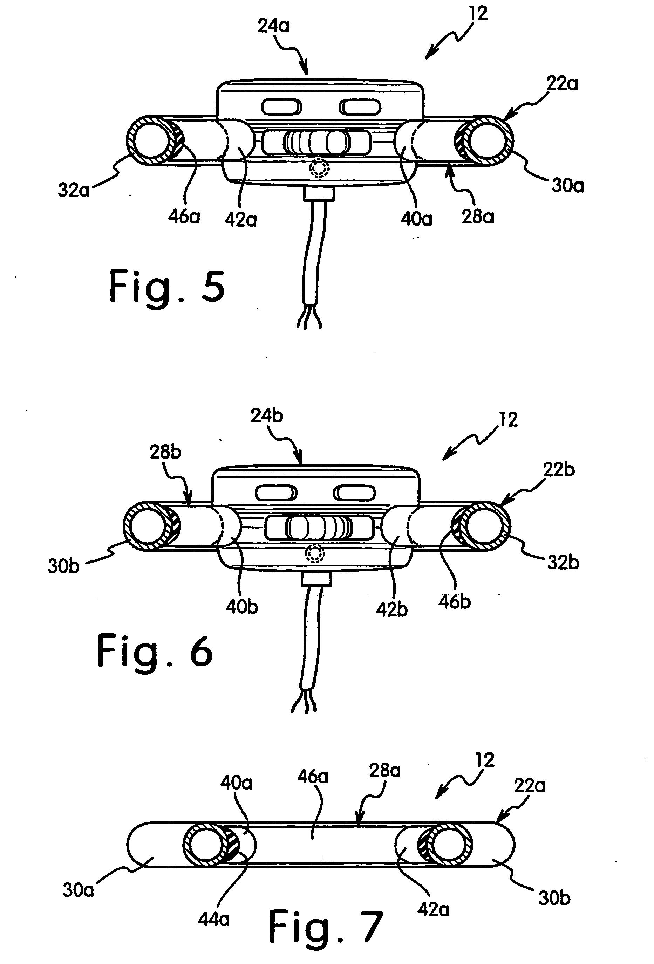

Referring now to Figures 1-7, the handlebar 12 will now be discussed in more detail. The handlebar 12 is preferably symmetrical relative to the center plane P. The handlebar 12 is preferably constructed of a lightweight, rigid tubular material such as a metallic material (e.g. aluminum tubing). However, it will be apparent to those skilled in the art from this disclosure that the handlebar 12 could be constructed of other materials known in the art such as other metallic materials as well as non-metallic materials, as needed and/or desired. In any case, the handlebar 12 is preferably constructed using conventional manufacturing techniques that are well known in the art. For example, the handlebar 12 can be constructed by first forming/bending a length of aluminum tubing substantially into the shape illustrated herein, and then fixedly coupling the free ends of the loops of the formed/bent aluminum tubing (e.g. by welding) to the transverse portion to form the closed loop gripping portions 22a and 22b, as illustrated herein.

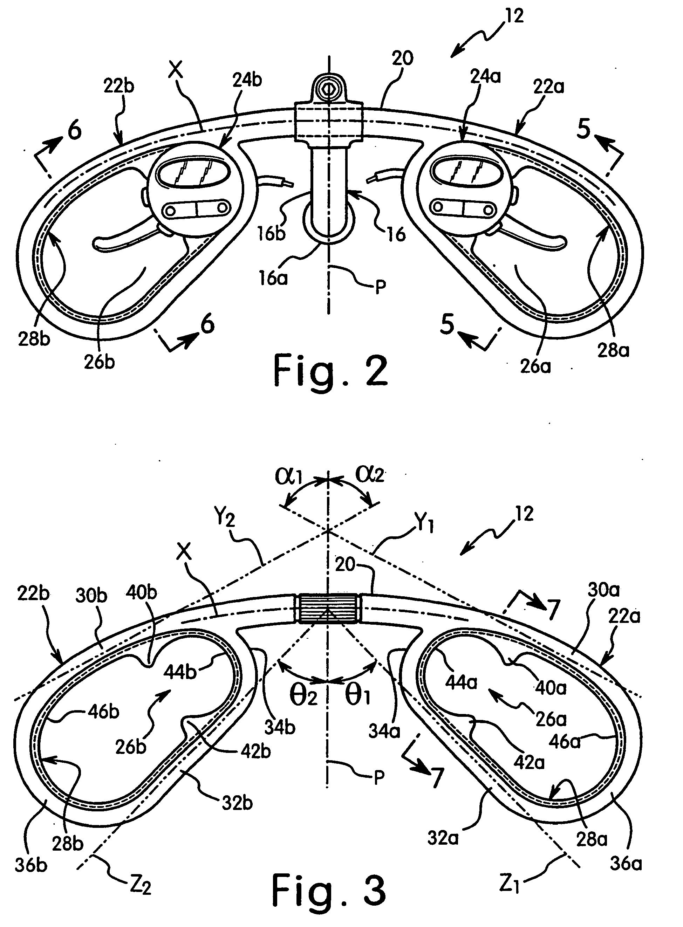

The mounting portion 20 of the handlebar 12 is preferably arc-shaped, except for a small central section that is linear (i.e., where the stem 16 is coupled thereto), as best seen in Figure 3. Thus, the mounting portion 20 extends substantially along an arc-shaped longitudinal axis X that is transverse to the center plane P. The gripping portions 22a and 22b extend outwardly from the mounting portion 20 in substantially opposite directions (i.e., first and second directions) located on opposite sides (i.e., first and second sides) of the center plane P. The first and second gripping portions 22a and 22b are preferably mirror images of each other due to the symmetrical shape of the handlebar 12. Thus, the first and second gripping portions 22a and 22b are substantially identical to each other.

The first gripping portion 22a basically includes a (first) forward bar section 30a, a (first) rearward bar section 32a, a (first) inner bar section 34a and a (first) outer bar section 36a. The bar sections 30a, 32a, 34a, and 36a are fixedly coupled together to form a (first) closed, substantially oval-shaped loop that defines the first gripping portion 22a. On the other hand, the second gripping portion 22b basically includes a (second) forward bar section 30b, a (second) rearward bar section 32b, a (second) inner bar section 34b and a (second) outer bar section 36b. The bar sections 30b, 32b, 34b, and 36b are fixedly coupled together to form a (second) closed, substantially oval-shaped loop that defines the second gripping portion 22b. For the sake of convenience, the bar sections 30a, 32a, 34a, 36a, 30b, 32b, 34b, and 36b are divided by phantom lines in Figure 3.

Preferably, the bar sections 30a, 32a, 34a and 36a have a substantially uniform, continuous cross-sectional profile about the entire periphery of the first gripping portion 22a, except where the first gripping portion 22a is coupled to the mounting portion 20. Similarly, the bar sections 30b, 32b, 34b, and 36b have a substantially uniform, continuous cross-sectional profile about the entire periphery of the second gripping portion 22b, except where the second gripping portion 22b is coupled to the mounting portion 20. Preferably, the various parts of the handlebar 12, including the mounting portion 20 and the bar sections 30a, 32a, 34a, 36a, 30b, 32b, 34b, and 36b have a circular cross-sectional profile. The mounting portion 20 can have the same or a slightly larger diameter than the gripping portions 22a and 22b.

The first forward and rearward bar sections 30a and 32a diverge outwardly from each other as they extend away from the center plane P (i.e., in the first direction), while the second forward and rearward bar sections 30b and 32b diverge outwardly from each other as they extend away from the center plane P (i.e., in the second direction). The first and second forward bar sections 30a and 30b are preferably arc-shaped bar sections that extend substantially along the longitudinal axis X of the mounting portion 20. Specifically, a majority of each of the bar sections 30a and 30b extend along the longitudinal axis X. However, the outer ends of the bar sections 30a and 30b have a larger curvature than the longitudinal axis X. The first and second rearward bar sections 32a and 32b are preferably linear bar sections with small curved ends.

More specifically, the first and second forward bar sections 30a and 30b preferably extend substantially along (first and second) forward linear longitudinal axes Y₁ and Y₂. The first and second forward linear longitudinal axes Y₁ and Y₂ preferably form angles α₁ and α₂ relative to the center plane P, as best seen in Figure 3. Preferably, the angles α₁ and α₂ are each about 65°. The first and second rearward bar sections 32a and 32b preferably extend along (first and second) rearward linear longitudinal axes Z₁ and Z₂. The first and second rearward linear longitudinal axes Z₁ and Z₂ preferably form angles θ₁ and θ₂ relative to the center plane P, as also best seen in Figure 3. Preferably angles θ₁ and θ₂ are each about 45°.

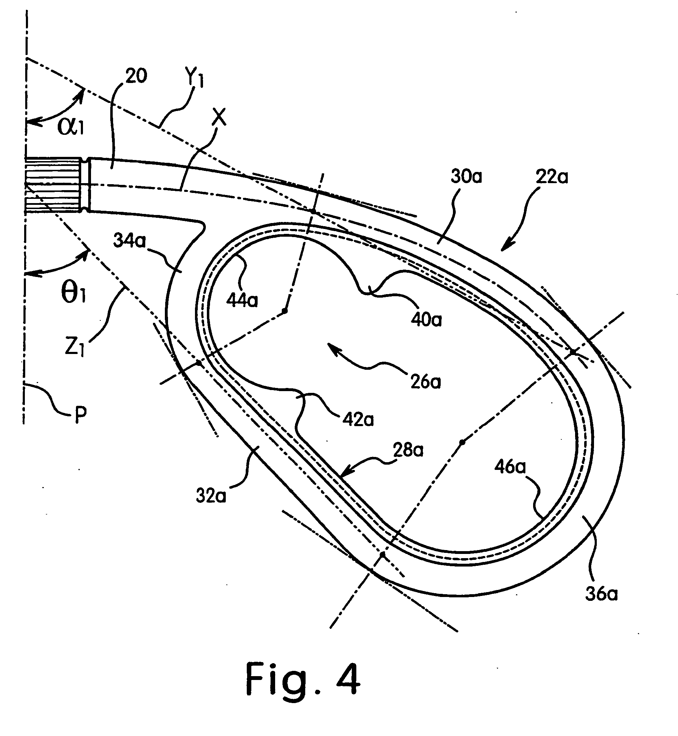

The inner end of each of the first and second forward bar sections 30a and 30b is defined at a point tangent to imaginary line that is angled about 75° relative to the center plane P, while the outer end of each of the first and second forward bar sections 30a and 30b is defined at a point tangent to imaginary line that is angled about 40° relative to the center plane P. Thus, each of the angles α₁ and α₂ is preferably between 40° and 75°. Because, the first and second forward bar sections are curved, the axes Y₁ and Y₂ extend between the inner and outer ends of the curved longitudinal axis X, as best seen in Figures 3 and 4.

Similarly, the inner end of each of the first and second rearward bar sections 32a and 32b is defined at a point tangent to imaginary line that is angled about 30° relative to the center plane P, while the outer end of each of the first and second forward bar sections 32a and 32b is defined at a point tangent to imaginary line that is angled about 55° relative to the center plane P. Thus, each of the angles θ₁ and θ₂ is preferably between 30° and 55°. Because, the rearward bar sections 32a and 32b are basically straight (i.e., linear, except at their inner and outer ends), the axes Z₁ and Z₂ correspond to the center axes of the straight sections of the rearward bar sections 32a and 32b. In other words, the longitudinal axes Z₁ and Z₂ are defined in the same manner as the longitudinal axes Y₁ and Y₂. However, the angles θ₁ and θ₂ would not change if defined differently, because the bar sections 32a and 32b are substantially straight.

In any case, the first forward and rear longitudinal axes Y₁ and Z₁ are preferably angled no greater than about 45° degrees relative to each other, while the second forward and rear longitudinal axes Y₂ and Z₂ are also preferably angled no greater than about 45° degrees relative to each other. More specifically, the first forward and rear longitudinal axes Y₁ and Z₁ are preferably angled about 20° degrees relative to each other, while the second forward and rear longitudinal axes Y₂ and Z₂ are preferably angled about 20° degrees relative to each other. Moreover, each of the first and second gripping portions 22a and 22b is preferably arranged and configured to extend only to one side (i.e., rearwardly when the handlebar 12 is mounted as illustrated herein) of a transverse plane perpendicular to the center plane P. In other words, each of the first and second gripping portions 22a and 22b is preferably arranged within a 90° arc relative to the center plane P.

Referring still to Figures 1-7, the first inner bar section 34a connects inner or converging ends of the first forward and rearward bar sections 30a and 32a, while the second inner bar section 34b connects inner or converging ends of the second forward and rearward bar sections 30b and 32b. On the other hand, the first outer bar section 36a connects outer or diverging ends of the first forward and rearward bar sections 30a and 32a, while the second outer bar section 36b connects outer or diverging ends of the second forward and rearward bar sections 30b and 32b. The inner bar sections 34a and 34b as well as the outer bar sections 36a and 36b are preferably curved bar sections. The outer bar sections 36a and 36b preferably have larger curvatures than the inner bar sections 34a and 34b, respectively. Thus, the inner bar sections 34a and 34b are inner connecting sections, while the outer bar sections 36a and 36b are outer connecting sections.

The first forward bar section 30a, the first rearward bar section 32a and the first outer bar section 36a form a (first) outer U-shaped loop, while the second forward bar section 30b, the second rearward bar section 32b and the second outer bar section 36b form a (second) outer U-shaped loop. Similarly, the first forward bar section 30a, the first rearward bar section 32a and the first inner bar section 34a form a (first) inner U-shaped or V-shaped loop, while the second forward bar section 30b, the second rearward bar section 32b and the second inner bar section 34b form a (second) inner U-shaped or V-shaped loop.

Preferably, the bar sections 30a, 32a, 36a, 30b, 32b and 36b are each sufficiently long so as to be gripped by the rider. Specifically, each of the bar sections 30a, 32a, 36a, 30b, 32b and 36b is sufficiently long so as to be gripped by a riders hand even when the accessory components 24a and 24b are coupled to the gripping portions 22a and 22b, respectively. Each of the gripping portions 22a and 22b preferably accounts for at least about one third of the overall length of the handlebar 12 as measured along the axis X in order to create this arrangement.

Referring now to Figures 2-7, the first and second elastic elements 28a and 28b will now be explained in more detail. The first and second elastic elements 28a and 28b retain the first and second accessory components 24a and 24b in the first and second accessory receiving spaces 26a and 26b, respectively, as mentioned above. The first and second elastic elements 28a and 28b are preferably fixedly coupled within the first and second accessory receiving spaces 26a and 26b, respectively via adhesive around their entire periphery. However, it will be apparent to those skilled in the art from this disclosure that the first and second elastic elements 28a and 28b are preferably fixedly coupled within the first and second accessory receiving spaces 26a and 26b, respectively, using other techniques as needed and/or desired.

The first elastic element 28a basically includes a (first) forward projection 40a, a (first) rearward projection 42a, a (first) inner loop section 44a and a (first) outer loop section 46a, while the second elastic element 28b basically includes a (second) forward projection 40b, a (second) rearward projection 42b, a (second) inner loop section 44b and a (second) outer loop section 46b. Preferably, the first forward projection 40a, the first rearward projection 42a, the first inner loop section 44a and the first outer loop section 46a are integrally formed together as a one-piece, unitary member, while the second forward projection 40b, the second rearward projection 42b, the second inner loop section 44b and the second outer loop section 46b are integrally formed together as a one-piece, unitary member. The parts of the elastic elements 28a and 28b will be discussed below in more detail.

Preferably, each of the first and second elastic elements 28a and 28b is constructed of a resilient, self supporting, elastomeric, shape retaining (i.e., springs back to the same shape and orientation after deformation as opposed to most rubber bands which are not shape retaining) material such as a rubber material. Such materials are often used for rubber bicycle hand grips and are well known in the bicycle art. Thus, the preferred material of the elastic elements 28a and 28b will not be discussed and/or illustrated in further detail herein.

However, it will be apparent to those skilled in the art from this disclosure that the elastic elements 28a and 28b could have other configurations and/or be constructed of different material(s) as needed and/or desired. For example, while the elastic elements 28a and 28b are illustrated as being continuous, one-piece loops, it will be apparent to those skilled in the art from this disclosure that each of the elastic elements 28a and 28b could have other structures as needed and/or desired. Specifically, each of the elastic elements 28a and 28b could be formed of several parts that are fixedly coupled at strategic locations in order to retain the accessory components 24a and 24b.

The first forward projection 40a, the first rearward projection 42a and the first inner loop section 44a define a substantially circular concave curved (first) retaining surface of the elastic element 28a that extends circumferentially about 270° around its center point as best seen in Figure 3. In any case, the first retaining surface of the elastic element 28a preferably extends at least 180° around its center point. The second forward projection 40b, the second rearward projection 42b and the second inner loop section 44b define a substantially circular concave curved (second) retaining surface of the elastic element 28b that extends circumferentially about 270° around its center point. In any case, the second retaining surface of the elastic element 28b preferably extends at least 180° around its center point.

The first projections 40a and 42a extend toward each other between the first looped sections 44a and 46a, while the second projections 40b and 42b extend toward each other between the second looped sections 44b and 46b. Thus, the first projections 40a and 42a extend inwardly from opposite ends of the curved first inner looped section 44a, while the second projections 40b and 42b extend inwardly from opposite ends of the curved second inner looped section 44b. Thus, the projections 40a, 40b, 42a and 42b effectively increase the thickness of the elastic elements 28a and 28b. The projections 40a, 40b, 42a and 42b, are effectively more deformable due to the increased thickness at the projections 40a, 40b, 42a and 42b. Thus, minor variances in the shapes of the accessory components 24a and 24b can be accommodated.

Referring now to Figures 1, 2, 5 and 6, the first and second accessory components 24a and 24b will now be explained in more detail. In the illustrated embodiment, each of the accessory components 24a and 24b is preferably a combined shift/brake control device that includes an integrated cycle computer. In particular, the accessory component 24a includes a pivotal brake lever with a Bowden cable coupled thereto in a conventional manner, and a pair of electrical shift control buttons with an electrical shift cable electrically coupled thereto in a conventional manner. Similarly, the accessory component 24b includes a pivotal brake lever with a Bowden cable coupled thereto in a conventional manner, and a pair of electrical shift control buttons with an electrical shift cable electrically coupled thereto in a conventional manner.

The parts of the accessory components 24a and 24b are conventional except for the manner in which they are coupled to the handlebar 12. Specifically, the outer shape of each of the accessory components 24a and 24b is configured so that the accessory components 24a and 24b are frictionally retained by the elastic elements 28a and 28b and/or by deformation of the elastic elements 28a and 28b, respectively. More specifically, the outer shape of each of the accessory components 24a and 24b is preferably configured and arranged with an annular recess that is sized and configured to engage the respective elastic elements 28a or 28b.

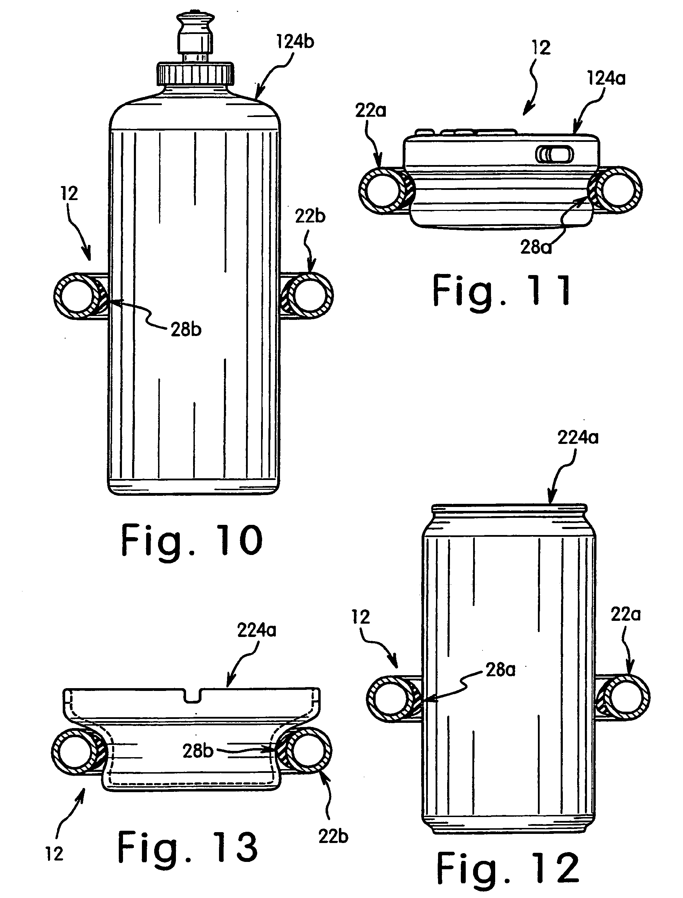

Of course, it will be apparent to those skilled in the art from this disclosure that the outer shape of each of the accessory components 24a and 24b can have other configurations as needed and/or desired. For example, the outer shapes of the accessory components 24a and 24b can be cylindrical shapes that are sized and configured to be frictionally retained by the elastic elements 28a and 28b and/or by deformation of the elastic elements 28a and 28b, respectively (i.e., similar to Figures 10 and 12), as needed and/or desired. Alternatively, the outer shapes of the accessory components 24a and 24b can be frusta-conically shaped (not shown), or undulating to effectively form a recess (i.e., similar to Figure 13), as needed and/or desired. In other words, the recesses illustrated herein could be eliminated if needed and/or desired. In any case, the outer shapes of the accessory components 24a and 24b are configured and arranged to cooperate with the elastic elements 28a and 28b to couple the accessory components 24a and 24b to the handlebar 12. Preferably, the accessory components 24a and 24b are pushed downwardly into the accessory receiving spaces 26a and 26b to couple the accessory components 24a and 24b to the handlebar 12.

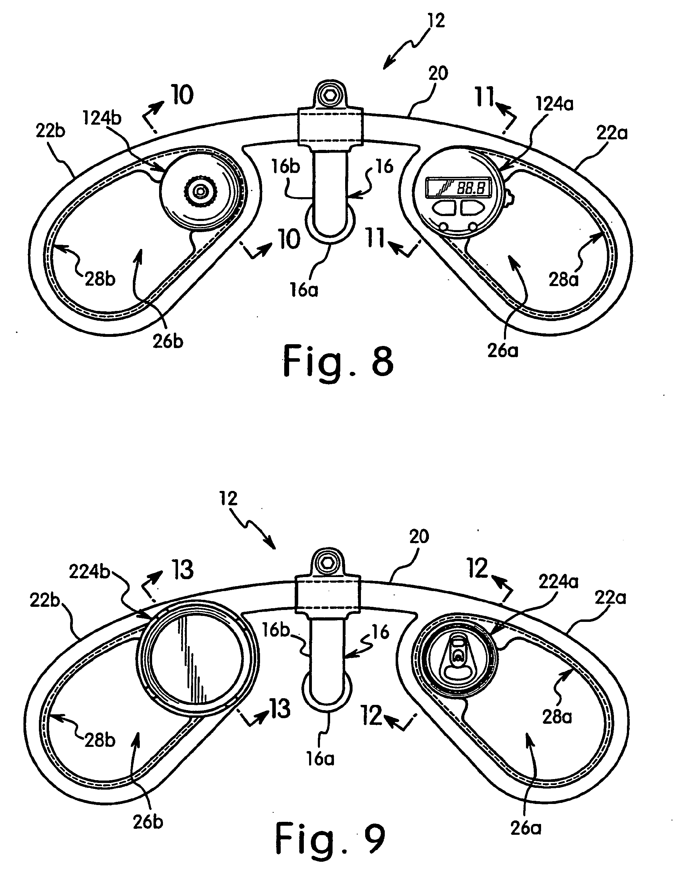

Referring to Figures 8-12, several different accessory components 124a, 124b, 224a and 224b are illustrated in accordance with the present invention, which are selectively coupled to the handlebar 12 in place of the accessory components 24a and/or 24b. In the illustrated embodiments, the accessory component 124a is preferably a radio, while the accessory component 124b is preferably a bicycle water (beverage) bottle. On the other hand, the accessory component 224a is preferably a beverage can, while the accessory component 224b is preferably a dish. Of course it will be apparent to those skilled in the art from this disclosure that other types of bicycle accessory components can be configured and arranged to be installed on the handlebar 12 in the same manner or substantially the same manner as the first and second accessory components 24a and 24b discussed above.

In particular, the radio accessory component 124a preferably has an outer shape substantially the same as the accessory components 24a and 24b, discussed above. On the other hand, the dish 224b has an annular contoured surface configured to be frictionally retained by and/or retained by deformation of the elastic element 28b. The dish 224b can be used to hold miscellaneous items such coins, keys or the like. A cover (not shown) could be provided for such uses. Alternatively, the dish 224b can be used as an ashtray or a cup holder. For example, tapered beverage cups such as those typically used in coffee shops and/or fast food restaurants could be received within the dish 224b.

The beverage can 224a and the beverage bottle 124b each have a cylindrical outer surface that is configured to be frictionally retained by and/or retained by deformation of the elastic elements 28a and 28b, respectively. Of course, it will be apparent to those skilled in the art from this disclosure that a tapered beverage cup such as those typically used in coffee shops and/or fast food restaurants could be mounted directly within the accessory receiving space 26a and/or 26b in place of one or more of the above accessory components 24a, 24b, 124a, 124b, 224a and 224b if needed and/or desired.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle handlebar comprising:
a mounting portion (20) configured and arranged to be coupled to the bicycle in a direction transverse to a center plane (P) of the bicycle;
a first gripping portion (22a) extending outwardly from said mounting portion in a first direction located on a first side of the center plane, said first gripping portion including a pair of first bar sections (30a, 32a) diverging outwardly from each other as said first bar sections extend away from the center plane;
said mounting portion (20) is arc-shaped, at least one of said first bar sections (30a, 32a) is arc-shaped, and said mounting portion and a majority of said at least one of said first bar sections that is arc-shaped extend along a common arc, and
a second gripping portion (22b) extending outwardly from said mounting portion in a second direction located on a second side of the center plane, **characterized in that**
said pair of first bar sections (30a, 32a) is arranged to form a first accessory receiving space (26a) therebetween, having an elastic element (28a) disposed therein that is configured and arranged to retain a bicycle accessory component in said first accessory receiving space.

2. The bicycle handlebar according to claim 1, wherein
said second gripping portion (22b) includes a pair of second bar sections (30b, 32b) diverging outwardly from each other as said second bar sections extend away from the center plane.

3. The bicycle handlebar according to claim 1 or 2, wherein
said first gripping portion (22a) includes a first outer connecting section (36a) extending between diverging ends of said first bar sections (30a, 32a) to form a substantially U-shaped loop.

4. The bicycle handlebar according to claim 3, wherein
said first gripping portion (22a) includes a first inner connecting section (44a) extending between converging ends of said first bar sections (30a, 32a) to form a closed loop together with said first bar sections and said outer connecting section.

5. The bicycle handlebar according to any one of claims 1 to 4, wherein
said second gripping portion (22b) is a substantially mirror image of said first gripping portion relative to the center plane.

6. The bicycle handlebar according to any one of claims 1 to 5, wherein
said first and second gripping portions (22a, 22b) are integrally formed with said mounting portion as a one-piece, unitary member.

7. The bicycle handlebar according to claim 4, 5 or 6, wherein
said first bar sections (30a, 32a), said first outer connecting section (36a), said first inner connecting section (44a) and said mounting portion (20) are integrally formed as a one-piece, unitary member.

8. The bicycle handlebar according to any one of claims 4 to 7, wherein
said first inner and outer connecting sections (36a, 44a) are curved such that a substantially oval-shaped open area is formed within said closed loop.

9. The bicycle handlebar according to any one of claims 1 to 8, wherein
said first gripping portion (22a) includes a first inner connecting section (44a) extending between converging ends of said first bar sections to form a substantially U-shaped loop.

10. The bicycle handlebar according to any one of claims 1 to 9, wherein
said bar sections diverge outwardly relative to said mounting portion at an angle no greater than about 45° relative to each other.

11. A bicycle handlebar according to claim 1, said first and/or said second gripping portion(s) (22a; 22b) being configured and arranged to form a pair of bar sections (30a, 32a; 30b, 32b) defining an accessory receiving space (26a; 26b) therebetween, said accessory receiving space having an elastic element (28a; 28b) disposed therein that is configured and arranged to retain a bicycle accessory component (24a; 24b) in said accessory receiving space, said first and second gripping portions (22a; 22b) being integrally formed with said mounting portion (20) as a one-piece, unitary member.

12. The bicycle handlebar according to claim 11, wherein
said bar sections (30a, 32a; 30b, 32b) are connected to each other by a connecting section (36a, 36b) to form a substantially U-shaped loop part.

13. The bicycle handlebar according to claim 12, wherein
said bar sections (30a, 32a; 30b, 32b) are further connected to each other by an additional connecting section (44a; 44b) to form a closed loop.

14. The bicycle handlebar according to claim 11, 12 or 13, wherein
said first and second gripping portions (22a, 22b) are substantially mirror images of each other relative to the center plane.

15. The bicycle handlebar according to claim 13 or 14, wherein
said connecting sections (36a, 44a; 36b, 44b) are curved such that a substantially oval-shaped open area is formed within said closed loop, at least part of said oval shaped opening defining said accessory receiving space (26a; 26b).

16. The bicycle handlebar according to any one of claims 11 to 15, wherein
said mounting portion (20) and said first and second gripping portions (22a, 22b) are configured and arranged to form an arc that includes at least one of said bar sections with said accessory receiving space being disposed on a concave side of said arc.

17. The bicycle handlebar according to any one of claims 11 to 16, wherein
said elastic element (28a; 28b) includes an elastomeric material coupled to at least one of said bar sections in particular to each of said bar sections.

18. The bicycle handlebar according to claim 17, wherein
said elastomeric material defines a curved surface with at least one projection extending inwardly from said curved surface, in particular said elastomeric material includes a pair of opposed projections (40a, 42a; 40b, 42b) extending inwardly from opposite ends of said curved surface.

19. The bicycle handlebar according to claim 17 or 18, wherein
said elastomeric material defines a curved surface with a substantially concave shape that is configured and arranged to frictionally retain a beverage container.

20. The bicycle handlebar according to any one of claim 11 to 18, wherein
said bar sections (30a, 32a; 30b, 32b) diverge outwardly relative to said mounting portion (20) at an angle no greater than about 45° relative to each other.

## Patentansprüche

1. Fahrradlenker, umfassend:
einen Montageabschnitt (20), ausgelegt und angeordnet um in einer Richtung quer zur Mittelebene P des Fahrrades an das Fahrrad gekoppelt zu werden;
einen ersten Griffabschnitt (22a), sich nach außen hin erstreckend von dem Montageabschnitt in einer ersten Richtung, befindlich an einer ersten Seite der Mittelebene, wobei der erste Griffabschnitt ein Paar von ersten Strebenabschnitten (30a, 32a) umfasst, nach außen divergierend mit Bezug zueinander in dem Maße wie sich die ersten Strebenabschnitte weg von der Mittelebene erstrecken;
wobei der -Montageabschnitt (20) bogenförmig ist, wobei zumindest einer der ersten Strebenabschnitte (30a, 32a) bogenförmig ist, und wobei der Montageabschnitt und ein Großteil des zumindest einem der ersten Strebenabschnitte, bogenförmig vorliegend, sich entlang eines gemeinsamen Bogens erstrecken, und
einen zweiten Griffabschnitt (22b), sich nach außen hin erstreckend von dem Montageabschnitt in einer zweiten Richtung, befindlich an einer zweiten Seite der Mittelebene, **dadurch gekennzeichnet, dass** das Paar von ersten Strebenabschnitten (30a, 32a) angeordnet ist um einen ersten Zubehöraufnahmeraum (26a) dazwischen auszubilden, ein elastisches Element (28a) aufweisend, darin befindlich und so ausgelegt und angeordnet, dass eine Fahrradzubehörkomponente in dem ersten Zubehöraufnahmeraum gehalten werden kann.

2. Fahrradlenker nach Anspruch 1, bei welchem der zweite Griffabschnitt (22b) ein Paar von zweiten Strebenabschnitten (30b, 32b) umfasst, nach außen divergierend mit Bezug zueinander in dem Maße wie sich die zweiten Strebenabschnitte weg von.der Mittelebene erstrecken.

3. Fahrradlenker nach Anspruch 1 oder 2, bei welchem der erste Griffabschnitt (22a) einen ersten äußeren Verbindungsabschnitt (36a) umfasst, sich erstreckend zwischen divergierenden Enden der ersten Strebenabschnitte (30a, 32a), um eine im Wesentlichen U-förmige Schlaufe zu bilden.

4. Fahrradlenker nach Anspruch 3, bei welchem der erste Griffabschnitt (22a) einen ersten inneren Verbindungsabschnitt (44a) umfasst, sich erstreckend zwischen konvergierenden Enden der ersten Strebenabschnitte (30a, 32a), um eine geschlossene Schlaufe zu bilden zusammen mit den ersten Strebenabschnitten und dem äußeren Verbindungsabschnitt.

5. Fahrradlenker nach einem der Ansprüche 1 bis 4, bei welchem der zweite Griffabschnitt (22b) im Wesentlichen spiegelbildlich ausgebildet ist bezüglich des ersten Griffabschnittes und dies mit Bezug auf die Mittelebene.

6. Fahrradlenker nach einem der Ansprüche 1 bis 5, bei welchem die ersten und zweiten Griffabschnitte (22a, 22b) integral oder einstückig ausgebildet sind mit dem Montageabschnitt als ein einstückiges integrales Teil.

7. Fahrradlenker nach einem der Ansprüche 4, 5 oder 6, bei welchem die ersten Strebenabschnitte (30a, 32a) der erste äußere Verbindungsabschnitt (36a), der erste innere Verbindungsabschnitt (44a) und der Montageabschnitt (20) integral ausgebildet sind als eine einstückiges integrales Teil.

8. Fahrradlenker nach einem der Ansprüche 4 bis 7, bei welchem die ersten inneren und äußeren Verbindungsabschnitte (36a, 44a) derart gekrümmt sind, dass eine im Wesentlichen ovalförmige offene Fläche in der geschlossenen Schlaufe ausgebildet ist.

9. Fahrradlenker nach einem der Ansprüche 1 bis 8, bei welchem der erste Griffabschnitt (22a) einen ersten inneren Verbindungsabschnitt (44a) umfasst, sich erstreckend zwischen konvergierenden Enden des ersten Strebenabschnitts zum Ausbilden einer im Wesentlichen U-förmigen Schlaufe.

10. Fahrradlenker nach einem der Ansprüche 1 bis 9, bei welchem die Strebenabschnitte nach außen relativ bezüglich des Montageabschnittes (20) bei einem Winkel divergieren, der nicht größer als etwa 45° ist, und zwar mit Bezug zueinander.

11. Fahrradlenker nach Anspruch 1, wobei die ersten und/oder zweiten Griffabschnitte (22a, 23) ausgelegt und angeordnet sind zum Bilden eines Paares von Strebenabschnitten (30a, 32a); (30b, 32b), einen Zubehöraufnahmeraum (26a, 26b) dazwischen definierend, wobei der Zubehöraufnahmeraum ein elastisches Element (28a, 28b) darin befindlich aufweist, ausgelegt und angeordnet zum Halten einer Fahrradzubehörkomponente (24a; 24b) in dem Zubehöraufnahmeraum, wobei die ersten und zweiten Griffabschnitte (22a; 22b) integral oder einstückig ausgebildet sind mit dem Montageabschnitte (22) als ein einstückiges integrales Teil.

12. Fahrradlenker nach Anspruch 11, bei welchem die Strebenabschnitte (30a, 32a; 30b, 32b) miteinander verbunden sind mittels eines Verbindungsabschnittes (36a, 36b) zum Ausbilden eines im Wesentlichen U-förmigen Schlaufenteiles.

13. Fahrradlenker nach Anspruch 12, bei welchem die Strebenabschnitte (30a, 32a; 30b, 32b) ferner miteinander verbunden sind durch einen zusätzlichen Verbindungsabschnitt (44a, 44b) zum Bilden einer geschlossenen Schlaufe.

14. Fahrradlenker nach Anspruch 11, 12 oder 13, bei welchem die ersten und zweiten Griffabschnitte (22a, 22b) im Wesentlichen spiegelbildlich zueinander relativ zur Mittelebene vorliegen.

15. Fahrradlenker nach Anspruch 13 oder 14, bei welchem die Verbindungsabschnitte (36a, 44a; 36b, 44b) derart gekrümmt sind, dass eine im Wesentlichen ovalförmige offene Fläche in der geschlossene Schlaufe ausgebildet ist, wobei zumindest ein Teil der ovalförmigen Öffnung den Zubehöraufnahmeraum (26a; 26b) definiert.

16. Fahrradlenker nach einem der Ansprüche 11 bis 15, bei welchem der Montageabschnitte (20) und die ersten und zweiten Griffabschnitte (22a, 22b) ausgelegt und angeordnet sind zum Bilden eines Bogens, der zumindest einen der Strebenabschnitte enthält, wobei der Zubehöraufnahmeraum an einer konkaven Seite des Bogens angeordnet ist.

17. Fahrradlenker nach einem der Ansprüche 11 bis 16, bei welchem das elastische Element (28a; 28b) ein elastomeres Material umfasst, gekoppelt bezüglich zumindest einem der Strebenabschnitte, insbesondere bezüglich jedem der Strebenabschnitte.

18. Fahrradlenker nach Anspruch 17, bei welchem der elastomere Material eine gekrümmte Fläche definiert, mit zumindest einer sich nach innen erstreckenden Vorkragung bezüglich der gekrümmten Fläche, insbesondere umfasst das elastomere Material ein Paar von einander gegenüberstehenden Vorsprüngen (40a, 42a; 40b; 42b), sich nach innen erstreckend von gegenüberliegenden Enden der gekrümmten Fläche.

19. Fahrradlenker nach Anspruch 17 oder 18, bei welchem das elastomere Material eine gekrümmte Fläche definiert mit einer im Wesentlichen konkaven Form, die ausgelegt und angeordnet ist zum reibschlüssigen Halten eines Getränkebehälters.

20. Fahrradlenker nach einem der Ansprüche 11 bis 18, bei welchem die Strebenabschnitte (30a, 32a; 30b, 32b) nach außen relativ bezüglich des Montageabschnittes (20) bei einem Winkel divergieren, der nicht größer als etwa 45° ist, und zwar mit Bezug zueinander.

## Revendications

1. Guidon de bicyclette comprenant:
une partie de montage (20) configurée et agencée pour être couplée à la bicyclette dans une direction transverse à un plan médian (P) de la bicyclette ;
une première partie de préhension (22a) s'étendant vers l'extérieur à partir de la partie de montage dans une première direction située sur un premier côté du plan médian, la première partie de préhension comprenant une paire de premières sections de barre (30a, 32a) divergeant vers l'extérieur l'une de l'autre lorsque les premières sections de barre s'éloignent du plan médian ;
la partie de montage (20) a une forme en arc, au moins l'une des premières sections de barre (30a, 32a) est en forme d'arc, et la partie de montage et une majorité de la dite au moins une des premières sections de barre qui est en forme d'arc s'étendent le long d'un arc commun; et
une deuxième partie de préhension (22b) s'étendant vers l'extérieur à partir de la partie de montage dans une deuxième direction située sur un deuxième côté du plan médian, **caractérisée en ce que**
la paire de premières sections de barre (30a, 32a) est agencée pour former un premier espace de réception d'accessoire (26a) entre eux, ayant un élément élastique (28a) qui y est
disposé, qui est configuré et agencé pour retenir un composant d'accessoire de bicyclette dans le dit premier espace de réception d'accessoire.

2. Guidon de bicyclette selon la revendication 1, dans lequel la deuxième partie de préhension (22b) comprend une paire de deuxièmes sections de barre (30b, 32b) qui divergent vers l'extérieur l'une par rapport à l'autre, lorsque les deuxièmes sections de barre s'éloignent du plan médian.

3. Guidon de bicyclette selon l'une quelconque des revendications 1 à 2, dans lequel la première partie de préhension (22a) comprend une première section de connexion externe (36a) s'étendant entre des extrémités divergentes des premières sections de barre (30a, 32a), pour former une boucle sensiblement en forme de U.

4. Guidon de bicyclette selon la revendication 3, dans lequel la première partie de préhension (22a) comprend une première section de connexion interne (44a) s'étendant entre des extrémités convergentes des premières sections de barre (30a, 32a), pour former une boucle fermée ensemble avec les premières section de barre et la section de connexion externe.

5. Guidon de bicyclette selon l'une quelconque des revendications 1 à 4, dans lequel la deuxième partie de préhension (22b) est sensiblement une image miroir de la première partie de préhension par rapport au plan médian.

6. Guidon de bicyclette selon l'une quelconque des revendications 1 à 5, dans lequel les première et deuxième parties de préhension (22a, 22b) sont intégralement formées avec la partie de montage comme un élément monobloc, unitaire.

7. Guidon de bicyclette selon l'une des revendications 4, 5 ou 6, dans lequel les premières sections de barre (30a, 32a), la première section de connexion externe (36a), la première section de connexion interne (44a) et la partie de montage (20) sont formées intégralement en tant qu'élément monobloc, unitaire.

8. Guidon de bicyclette selon l'une quelconque des revendications 4 à 7, dans lequel les premières sections interne et externe (36a, 44a) sont courbées de sorte qu'une zone ouverte sensiblement de forme ovale est formée à l'intérieur de la boucle fermée.

9. Guidon de bicyclette selon l'une quelconque des revendications 1 à 8, dans lequel la première partie de préhension (22a) comprend une première section de connexion interne (44a) s'étendant entre des extrémités convergentes des premières sections de barre pour former une boucle sensiblement en forme de U.

10. Guidon de bicyclette selon l'une quelconque des revendications 1 à 9, dans lequel les sections de barre divergent vers l'extérieur par rapport à la partie de montage, selon un angle qui n'est pas supérieur à environ 45° l'une par rapport à l'autre.

11. Guidon de bicyclette selon la revendication 1, la première et/ou la deuxième partie de préhension (22a, 22b) étant configurée et agencée pour former une paire de sections de barre (30a, 32a ; 30b, 32b) définissant un espace de réception d'accessoire (26a, 26b) entre eux, l'élément de réception d'accessoire ayant un élément élastique (28a ; 28b) qui y est disposé, qui est configuré et agencé pour retenir un composant d'accessoire de bicyclette (24a ; 24b) dans le dit espace de réception d'accessoire, les première et deuxième parties de préhension (22a ; 22b) étant intégralement formées avec la partie de montage (20), en tant qu'élément unitaire, monobloc.

12. Guidon de bicyclette selon la revendication 11, dans lequel les sections de barre (30a, 32a ; 30b, 32b) sont reliées l'une à l'autre par une section de connexion (36à, 36b) pour former une partie en boucle sensiblement en forme de U.

13. Guidon de bicyclette selon la revendication 12, dans lequel les sections de barre (30a, 32a ; 30b, 32b) sont en outre reliées les unes aux autres par une section de connexion supplémentaire (44a ; 44b) pour former une boucle fermée.

14. Guidon de bicyclette selon la revendication 11, 12 ou 13, dans lequel les première et deuxième parties de préhension (22a, 22b) sont sensiblement des images miroir l'une de l'autre par rapport au plan médian.

15. Guidon de bicyclette selon la revendication 13 ou 14, dans lequel les sections de connexion (36a, 44a ; 36b, 44b) sont courbées de sorte qu'une zone ouverte sensiblement de forme ovale est formée à l'intérieur de la boucle fermée, au moins une partie de l'ouverture de forme ovale définissant l'espace de réception d'accessoire (26a ; 26b).

16. Guidon de bicyclette selon l'une quelconque des revendications 11 à 15, dans lequel la partie de montage (20) et les première et deuxième parties de préhension (22a, 22b) sont configurées et agencées pour former un arc qui comprend au moins l'une des sections de barre avec l'espace de réception d'accessoire qui est disposé sur un côté concave de l'arc.

17. Guidon de bicyclette selon l'une quelconque des revendications 11 à 16, dans lequel l'élément élastique (28a ; 28b) comprend un matériau élastomère couplé à au moins une des sections de barre, en particulier à chacune des sections de barre.

18. Guidon de bicyclette selon la revendication 17, dans lequel le matériau élastomère définit une surface courbée, avec au moins une projection s'étendant vers l'intérieur à partir de la surface courbée, en particulier le matériau élastomère comprend une paire de projections opposées (40a, 42a ; 40b, 42b) s'étendant vers l'intérieur à partir d'extrémités opposées de la surface courbée.

19. Guidon de bicyclette selon la revendication 17 ou 18, dans lequel le matériau élastomère définit une surface courbée qui a une forme sensiblement concave, configurée et agencée pour retenir par frottement un contenant de boisson.

20. Guidon de bicyclette selon l'une quelconque des revendications 11 à 18, dans lequel les sections de barre (30< 32a ; 30b, 32b) divergent vers l'extérieur par rapport à la partie de montage (20), selon un angle qui n'est pas supérieur à environ 45° les unes par rapport aux autres.
